# EUROPÄISCHE PATENTSCHRIFT

(11) **EP 3 140 817 B1**
(45) Veröffentlichungstag und Bekanntmachung des Hinweises auf die Patenterteilung: **14.03.2018**
(21) Anmeldenummer: 15735842.5
(22) Anmeldetag: 30.04.2015
(51) Int. Cl.: G07C 5/08, B60W 40/09, B60W 50/08, B60W 50/14

(54) **FAHRERASSISTENZSYSTEM UND VERFAHREN ZUR AUTOMATISIERTEN PROTOKOLLIERUNG VON PROTOKOLLDATEN**
DRIVER ASSISTANCE SYSTEM AND METHOD FOR AUTOMATICALLY LOGGING LOG DATA
SYSTÈME D'AIDE À LA CONDUITE ET PROCÉDÉ DE PROTOCOLISATION AUTOMATIQUE DE DONNÉES DE PROTOCOLE

(30) Priorität: 08.05.2014 DE 102014208638
(43) Veröffentlichungstag der Anmeldung: 15.03.2017
(73) Patentinhaber: Continental Teves AG & Co. OHG, 60488 Frankfurt (DE)
(72) Erfinder: RIETH, Peter E., 65343 Eltville (DE)
(74) Vertreter: Bobbert, Christiana
(86) Internationale Anmeldenummer: PCT/DE2015/200290
(87) Internationale Veröffentlichungsnummer: WO 2015/169312

(56) Entgegenhaltungen:
- EP-A1- 2 314 489
- CN-U- 201 886 532
- CN-U- 202 358 096
- DE-A1-102013 003 496
- US-A1- 2013 096 731

## Beschreibung

Die Erfindung betrifft ein Fahrerassistenzsystem eines Kraftfahrzeuges sowie ein Verfahren zur automatisierten Protokollierung von Protokolldaten.

Aktuell werden Kraftfahrzeuge für den Straßenverkehr mehr und mehr mit Fahrerassistenzsystemen ausgestattet, die einen Fahrzeugführer oder einen Fahrer bei der Fahrzeugführung des Kraftfahrzeuges unterstützen. Die Fahrerassistenzsysteme dienen insbesondere dazu, die Sicherheit zu erhöhen und Unfälle zu vermeiden. Die Fahrerassistenzsysteme sind heute häufig nur unterstützend für den Fahrer ausgelegt, sollen jedoch zunehmend auch temporär vollautomatisiert die Führung des Fahrzeugs übernehmen, was mit zusätzlichen sicherheitskritischen Anforderungen einhergeht.

Die Offenlegungsschrift EP2314489A1 offenbart ein Verfahren zur Steuerung des Betriebs eines vollautomatischen, zur unabhängigen Fahrzeugführung ausgebildeten Fahrerassistenzsystems eines Kraftfahrzeugs. Das Verfahren sieht die Ausgabe eines Übernahmesignals an den Fahrer vor, wenn wenigstens eine zuvor definierte Übernahmebedingung erfüllt ist. Übernimmt der Fahrer daraufhin insbesondere durch Betätigung des Lenkrads und/oder der Pedalerie wird das Fahrerassistenzsystem deaktiviert.

Ausgehend hiervon liegt der Erfindung die Aufgabe zugrunde, ein verbessertes Fahrerassistenzsystem zu ermöglichen, welches zur vollautomatisierten Führung des Fahrzeugs ausgebildet ist.

Diese Aufgabe wird erfindungsgemäß gelöst durch ein Fahrerassistenzsystem mit einem Ereignisdatenschreiber mit den Merkmalen des Anspruchs 1 sowie durch ein Verfahren mit den Merkmalen des Anspruchs 12. Bevorzugte Weiterbildungen sind in den rückbezogenen Ansprüchen enthalten. Die im Hinblick auf das Fahrerassistenzsystem angeführten Vorteile und bevorzugten Ausgestaltungen sind sinngemäß auch auf das Verfahren übertragbar und umgekehrt.

Der Ereignisdatenschreiber dient dabei zur automatisierten Protokollierung eines Übergangs der Verantwortlichkeit bei einem Statuswechsel zwischen einer vollautomatischen Fahrzeugführung und einer manuellen Fahrzeugführung eines Kraftfahrzeuges, insbesondere eines Kraftfahrzeuges für den Straßenverkehr. Der Ereignisdatenschreiber ist hierbei Teil des Fahrerassistenzsystems, mittels dessen eine vollautomatische Fahrzeugführung ermöglicht wird. Er ist wahlweise in eine herkömmliche Steuerungskomponente des Fahrerassistenzsystems integriert oder aber als eigenständige Baueinheit ausgebildet, um ein herkömmliches Fahrerassistenzsystem zu ergänzen und gegebenenfalls nachzurüsten.

Der Ereignisdatenschreiber umfasst einen Datenspeicher und eine Steuereinheit, wobei die Steuereinheit derart eingerichtet ist, dass eine zeitlich begrenzte Aufzeichnung von Protokolldaten mittels des Datenspeichers ausgelöst wird, wenn ein Vorwarnsignal, welches den Statuswechsel zwischen der vollautomatischen Fahrzeugführung und der manuellen Fahrzeugführung ankündigt, an die Steuereinheit übermittelt wird. Die Aufzeichnung der Protokolldaten wird dabei von dem Vorwarnsignal getriggert. Die Aufzeichnung startet beispielsweise mit dem Vorwarnsignal oder auch um eine kurze Zeitspanne beispielsweise von einigen wenigen Sekunden zeitversetzt hierzu.

Die dahinter stehende Grundidee basiert dabei auf der Überlegung, dass bei Fahrerassistenzsysteme , die einen Fahrzeugführer oder Fahrer eines Kraftfahrzeuges nicht nur unterstützen, sondern bei Bedarf oder auf Wunsch die Führung des Kraftfahrzeuges vollständig übernehmen, die also für eine vollautomatische Fahrzeugführung ausgebildet sind, der Statuswechsel zwischen der vollautomatischen Fahrzeugführung durch das Assistenzsystem und einer manuellen Fahrzeugführung durch den Fahrer kritisch ist.

Der jeweilige Fahrzeugführer oder Fahrer kann bei Bedarf die manuelle Fahrzeugführung des Kraftfahrzeuges einstellen und die Fahrzeugführung an das Fahrerassistenzsystem übergeben. Unter "vollautomatische Fahrzeugführung" wird vorliegend verstanden, dass der jeweilige Fahrzeugführer oder Fahrer während der vollautomatischen Fahrzeugführung auch keinerlei Kontroll- oder Überwachungsfunktion übernimmt, so dass der Fahrzeugführer auch mental quasi zu 100 % entlastet wird und sich der Fahrzeugführer während der vollautomatischen Fahrzeugführung fremdbeschäftigen kann, also zum Beispiel ein Buch lesen, kann.

Je nach nationaler Gesetzgebung hat dies zur Folge, dass bei einem Statuswechsel zwischen einer manuellen Fahrzeugführung und einer vollautomatischen Fahrzeugführung auch ein Übergang der Verantwortlichkeit erfolgt. Während also der jeweilige Fahrzeugführer die Verantwortung für die Fahrzeugführung trägt, solange die Fahrzeugführung manuell, also durch den Fahrzeugführer, erfolgt, liegt die Verantwortlichkeit beim Hersteller des Kraftfahrzeuges, solange die vollautomatische Fahrzeugführung aktiviert ist und das Kraftfahrzeug durch das Fahrerassistenzsystem gesteuert wird. Von Bedeutung ist dieser Übergang der Verantwortlichkeit bei jedem Statuswechsel zwischen der manuellen Fahrzeugführung und der vollautomatischen Fahrzeugführung insbesondere im Falle eines Unfalls, da der zum Zeitpunkt des Unfalls Verantwortliche für einen unfallbedingten Schaden haftet. Sowohl aus Sicht des Herstellers des Kraftfahrzeuges als auch aus Sicht des jeweiligen Fahrzeugführers oder Fahrers des Kraftfahrzeuges ist es daher wünschenswert, im Falle eines Unfalls nachweisen zu können, bei wem die Verantwortlichkeit zum Zeitpunkt des Unfalls lag und wer dementsprechend für einen unfallbedingten Schaden haftet. Ein entsprechender Nachweis ist mit Hilfe des hier vorgestellten Ereignisdatenschreibers möglich, da dieser den Übergang der Verantwortlichkeit bei einem Statuswechsel zwischen der vollautomatischen Fahrzeugführung und der manuellen Fahrzeugführung automatisch und automatisiert protokolliert und dabei Protokolldaten aufzeichnet, die geeignet sind nachzuweisen, bei wem die Verantwortlichkeit zum Zeitpunkt eines Unfalls lag.

Ein verhältnismäßig einfacher Sachverhalt ist dabei gegeben, wenn der Fahrer zum Beispiel mittels einer Sprachsteuerung oder durch Betätigung eines Bedienelements einen Betriebsmodus eines Fahrerassistenzsystems aktiviert oder einschaltet, welcher für die vollautomatische Fahrzeugführung konzipiert ist. Hier erfolgt der Statuswechsel von der manuellen Fahrzeugführung durch den jeweiligen Fahrzeugführer oder Fahrer zur vollautomatischen Fahrzeugführung durch das Fahrerassistenzsystem durch und quasi zeitgleich mit der Eingabe eines entsprechenden Steuerbefehls durch die Bedienung des Bedienelements oder den entsprechenden Sprachbefehl. Vergleichbar einfach gestaltet sich in den meisten Fällen auch der Statuswechsel von der vollautomatischen Fahrzeugführung zur manuellen Fahrzeugführung, wobei hier der Statuswechsel entweder wiederum durch einen Sprachbefehl oder die Bedienung eines Bedienelements initiiert wird oder aber durch einen manuellen Eingriff des jeweiligen Fahrzeugführers oder Fahrers, beispielsweise indem dieser eine Lenkbewegung ausführt oder ein Pedal betätigt, zum Beispiel das Bremspedal.

Von besonderer Bedeutung ist jedoch der Sonderfall, wenn das Fahrerassistenzsystem, beispielsweise aufgrund eines erkannten Fehlers, den Fahrer zur Rückübernahme der Fahrverantwortung und somit der Verantwortlichkeit auffordert, wenn also ein Statuswechsel zwischen der vollautomatischen Fahrzeugführung und der manuellen Fahrzeugführung nicht durch den jeweiligen Fahrzeugführer sondern durch das Fahrerassistenzsystem selbst initiiert wird. Solche dem jeweiligen Fahrzeugführer quasi aufgezwungenen Statuswechsel sind dabei Teil einer Sicherungsfunktion, mit deren Hilfe eine fehlerhafte Fahrzeugführung durch das Fahrerassistenzsystem vermieden werden soll.

Wenn nun zum Beispiel ein für die vollautomatische Fahrzeugführung notwendiges Sensorsystem fehlerhaft arbeitet oder defekt bedingt ausfällt, so führt dies zu einer Fehlermeldung im Fahrerassistenzsystem und aufgrund dieser Fehlermeldung wird dann ein Vorwarnsignal generiert, welches den Statuswechsel zwischen der vollautomatischen Fahrzeugführung und der manuellen Fahrzeugführung ankündigt. Der Statuswechsel wird somit nicht sofort, also beispielsweise unmittelbar beim Auftreten eines Fehlers, vorgenommen, sondern bewusst zeitversetzt. Grund hierfür ist schlichtweg der Umstand, dass der entsprechende Statuswechsel nicht durch den jeweiligen Fahrzeugführer oder Fahrer initiiert wird und dass dieser je nach Situation etwas Zeit benötigt, um sich auf den Statuswechsel und somit die Übernahme der Fahrzeugführung vorzubereiten. Dementsprechend wird der jeweilige Fahrzeugführer mithilfe des Vorwarnsignals vorgewarnt, dass die vollautomatische Fahrzeugführung zeitnah eingestellt wird und dass dieser dementsprechend die Fahrzeugführung wieder übernehmen muss.

Durch die Aufzeichnung von Protokolldaten über eine bestimmte Zeitspanne hinweg ab dem Vorwarnsignal ist es möglich, bei Bedarf, also beispielsweise wenn sich im entsprechenden Zeitraum ein Unfall ereignet, nachzuvollziehen, ob der Statuswechsel zwischen der vollautomatischen Fahrzeugführung und der manuellen Fahrzeugführung des Kraftfahrzeuges wie vorgesehen erfolgt ist und zu welchem Zeitpunkt der Übergang der Verantwortlichkeit an den jeweiligen Fahrzeugführer oder Fahrer erfolgt ist. Der genaue Zeitpunkt des Übergangs hängt dabei zum Beispiel von der Reaktionsgeschwindigkeit des jeweiligen Fahrzeugführers ab, also davon, wie lange es dauert, bis der jeweilige Fahrzeugführer Lenkbewegungen wieder manuell ausführt. Als Protokolldaten eignen sich somit zum Beispiel Sensordaten von Sensoren, die Lenkbewegungen oder Pedalbewegungen, also zum Beispiel Bewegungen des Bremspedals, erfassen, da diese zeigen, ab wann der jeweilige Fahrzeugführer wieder manuell in die Fahrzeugführung eingegriffen und somit die Fahrzeugführung übernommen hat.

Als Protokolldaten werden weiter je nach Anwendungsszenario sehr unterschiedliche Daten genutzt, wobei die Protokolldaten bevorzugt zumindest das Vorwarnsignal oder den Zeitpunkt des Vorwarnsignals, also insbesondere den Zeitpunkt der Übermittlung des Vorwarnsignals, umfassen. Mithilfe des Vorwarnsignals wird quasi der Statuswechsel zwischen der vollautomatischen Fahrzeugführung und der manuellen Fahrzeugführung des Kraftfahrzeuges eingeleitet oder initiiert und angekündigt. Üblicherweise geht die für eventuelle Haftungsansprüche relevante Verantwortlichkeit automatisch nach einer festgelegten Vorwarnzeitspanne per Fiktion an den Fahrzeugführer über, selbst wenn dieser nicht aktiv eingreift. Dementsprechend ist die Information des Zeitpunkts des Vorwarnsignals von besonderer Bedeutung für den Nachweis der korrekten Übergabe der Fahrzeugführung.

Von Vorteil ist es desweiteren, wenn die Protokolldaten Bilddaten einer Innenraumkamera im Kraftfahrzeug umfassen, die die Handlungen oder das Verhalten des jeweiligen Fahrzeugführers nach dem Vorwarnsignal wiedergeben. Diese Ausführungsvariante ist insbesondere dann günstig, wenn ohnehin eine Kamera zur Innenraumüberwachung vorgesehen ist. Entsprechende Kameras werden beispielsweise eingesetzt, um den Zustand des Fahrzeugführers zu analysieren und um ein Warnsystem zu realisieren, das den jeweiligen Fahrzeugführer auf ein problematisches Verhalten aufmerksam macht, welches beispielsweise auf Müdigkeit oder Unaufmerksamkeit schließen lässt. In diesem Fall lassen sich dann die Bilddaten einer solche Kamera oder Innenraumkamera bei Bedarf zusätzlich als Protokolldaten nutzen.

Zweckdienlicherweise wird das Vorwarnsignal von dem Fahrerassistenzsystem selbst automatisch erzeugt und an die Steuereinheit des Ereignisdatenschreibers übermittelt, um die temporäre Aufzeichnung der Protokolldaten zu starten.

Bevorzugt wird gleichzeitig mit dem Vorwarnsignal zusätzlich auch ein akustisches und/oder optisches Signals erzeugt, mittels dessen der jeweilige Fahrzeugführer oder Fahrer des Kraftfahrzeuges vorgewarnt wird. In vorteilhafter Weiterbildung werden zusätzlich bis zum Statuswechsel zwischen der vollautomatischen Fahrzeugführung und der manuellen Fahrzeugführung weitere Warnsignale optisch und/oder akustisch ausgegeben, wobei die Warnsignale weiter bevorzugt zunehmend "bedrohlicher" wirken, sodass der jeweilige Fahrzeugführer quasi in mehreren Eskalationsstufen gewarnt wird. Dies lässt sich zum Beispiel bei einem akustischen Signal dadurch erreichen, dass die Lautstärke, die Frequenz und/oder die Dauer des Signals von Signal zu Signal zunimmt bzw. zunehmen.

Im Falle eines aus Sicherheitsgründen dem jeweiligen Fahrzeugführere quasi aufgezwungenen Statuswechsels zwischen der vollautomatischen Fahrzeugführung und der manuellen Fahrzeugführung wechselt also allgemein das Fahrerassistenzsystem nach einer fest vorgegebenen Vorwarnzeitspanne ab der Übermittlung des Vorwarnsignals von einem ersten Status oder Betriebsmodus "vollautomatisch" in einen zweiten Status oder Betriebsmodus "manuell". Dieser Wechsel des Status ist zunächst in erster Linie fiktiv und definiert den Zeitpunkt des Wechsels der Verantwortlichkeit, wenn der Fahrer nicht aktiv eingreift. Der Statuswechsel bedeutet nicht zwingend, dass die vollautomatische Fahrzeugführung eingestellt wird, wenn also beispielsweise kein aktives Eingreifen des Fahrers erfolgt. Das Kraftfahrzeug wird bei ausbleibender Reaktion des jeweiligen Fahrzeugführers, beispielsweise aus gesundheitlichen Gründen, bevorzugt in einen Notmodus versetzt und beispielsweise zum Stillstand gebracht, wenn dies die Verkehrssituation erlaubt. Bevorzugt beträgt die Vorwarnzeitspanne einige Sekunden beispielsweise im Bereich von 5 bis 20 Sekunden und insbesondere 10 Sekunden.

Vorzugsweise wird die zeitlich begrenzte Aufzeichnung von Protokolldaten nach einer Kontrollzeitspanne beginnend mit dem Statuswechsel zum zweiten Status "manuell" beendet. Die Kontrollzeitspanne beträgt insbesondere ebenfalls mehrere Sekunden, beispielsweise 5 bis 20 Sekunden. Hierdurch lässt sich unter anderem der Datenumfang einer entsprechenden Aufzeichnung begrenzen.

Von Vorteil ist es zudem, wenn die Protokolldaten nur dann dauerhaft im Datenspeicher abgespeichert werden, wenn innerhalb einer definierten Ereigniszeitspanne ein Unfallereignissignal an die Steuereinheit übermittelt wird. Da der Ereignisdatenschreiber in erster Linie dazu dient, in Falle eines Unfalls nachweisen zu können, bei wem zum Zeitpunkt des Unfalls die Verantwortlichkeit lag, werden in der Regel die Protokolldaten nur dann wirklich benötigt, wenn sich tatsächlich ein Unfall ereignet. Ist dies der Fall, so wird dafür Sorge getragen, dass die entsprechenden Protokolldaten zumindest so lange im Datenspeicher verbleiben, bis diese ausgelesen und in einem externen Gerät gesichert werden. Ereignet sich hingegen kein Unfall, so werden die Protokolldaten nach einer gewissen Zeit wieder gelöscht oder der entsprechende Bereich des Datenspeichers wird wieder überschrieben.

Der Zeitpunkt für den Start der Ereigniszeitspanne ist beispielsweise der Zeitpunkt des Vorwarnsignals, des Zeitpunkt des Wechsels zwischen den beiden Stati oder ein Zeitpunkt dazwischen. Die Ereigniszeitspanne endet bevorzugt mit dem Ende der Kontrollzeitspanne, beträgt daher in der Regel einige 10 Sekunden, beispielsweise 10 bis 20 Sekunden.

Ein entsprechendes Unfallereignissignal wird dabei beispielsweise bei der Auslösung eines Airbags generiert und von einem Airbag-Steuergerät an das Steuergerät des Ereignisdatenschreibers übermittelt. Alternativ oder ergänzend hierzu erfolgt die Generierung eines entsprechenden Unfallereignissignals durch die Sensoren oder die Steuereinheit einer Einparkhilfe.

Um den technischen Aufwand für die Realisierung des Ereignisdatenschreibers und insbesondere für den Datenspeicher möglichst gering zu halten, ist es außerdem vorteilhaft, den Datenspeicher nach Art eines so genannten rollierenden Speichers zu nutzen. Das heißt, dass so lange Protokolldaten im Datenspeicher abgespeichert werden, bis dieser voll ist, und nachfolgend werden die abgespeicherten Protokolldaten überschrieben, wobei die ältesten abgespeicherten Protokolldaten zuerst überschrieben werden. Hierdurch lässt sich dann ein Datenspeicher mit geringerer Kapazität für den Ereignisdatenschreiber nutzen. Im Falle eines Unfalls wird dann ein bestimmter Bereich des Datenspeichers, in dem die dazugehörigen Protokolldaten abgespeichert sind, gesperrt, sodass dieser Bereich nachfolgend nicht überschrieben wird. Diese Sperrung bleibt dann so lange aufrechterhalten, bis die entsprechenden Daten ausgelesen und in einem externen Gerät gesichert werden.

Gemäß einer zweckdienlichen Ausgestaltung ist der Ereignisdatenschreibers zugleich auch für eine Protokollierung von Unfallrekonstruktionsdaten ausgebildet, anhand derer sich Unfallereignisse, also insbesondere der Ablauf eines Unfalls, rekonstruieren lassen. In diesem Fall dient der Ereignisdatenschreiber dann zusätzlich als so genannter Unfalldatenschreiber oder als so genannte Blackbox.

Hierbei werden die Protokolldaten und die Unfallrekonstruktionsdaten bevorzugt unabhängig voneinander aufgezeichnet und weiter bevorzugt in verschiedenen Datenspeichern oder Datenspeicherbereichen unabhängig voneinander abgespeichert. In diesem Fall sind dann Daten, die sowohl in den Protokolldaten als auch in den Unfallrekonstruktionsdaten enthalten sind, doppelt abgespeichert.

Ein Ausführungsbeispiel der Erfindung ist nachfolgend anhand einer schematischen Zeichnung näher erläutert. Darin zeigen:
- FIG 1: in einer Blockschaltbilddarstellung ein Kraftfahrzeug mit einem Fahrerassistenzsystem und mit einem Ereignisdatenschreiber sowie
- FIG 2: eine schematische Darstellung des zeitlichen Ablaufs.

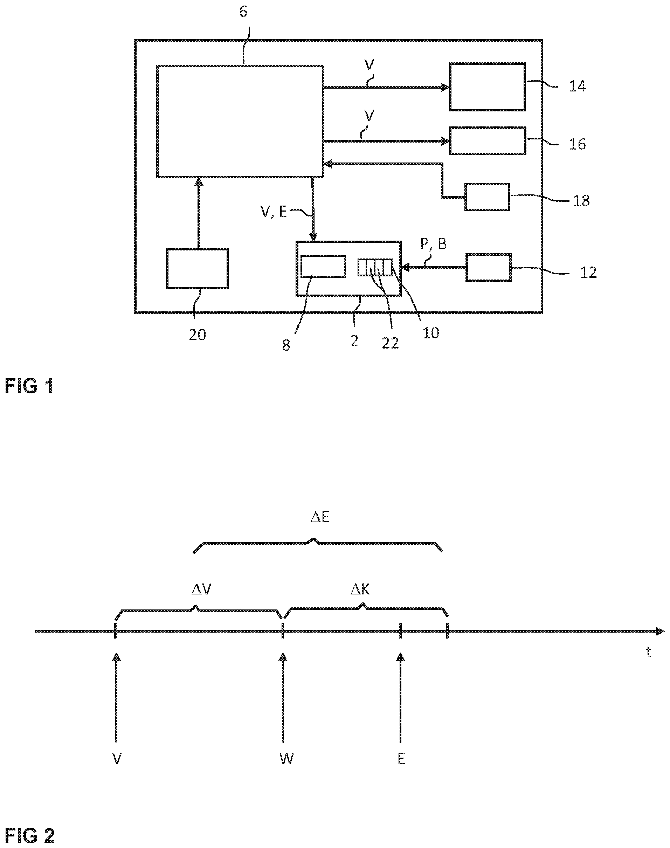

Im nachfolgend exemplarisch beschriebenen und in Fig. 1 skizzierten Ausführungsbeispiel ist ein Ereignisdatenschreiber 2 in einem als Personenkraftwagen ausgeführten Kraftfahrzeug 4 verbaut und ergänzt hier ein Fahrerassistenzsystem 6.

Jenes Fahrerassistenzsystem 6 ist dabei für den Betrieb in zwei unterschiedlichen Betriebsmodi konzipiert, wobei das Kraftfahrzeug 4 in einem ersten Betriebsmodus manuell geführt wird und somit von einem Fahrzeugführer oder Fahrer gesteuert wird und wobei das Kraftfahrzeug 4 im zweiten Betriebsmodus durch das Fahrerassistenzsystem 6 vollautomatisch geführt, also vom Fahrerassistenzsystem gesteuert wird.

Befindet sich nun das Fahrerassistenzsystem 6 in dem zweiten Betriebsmodus für die vollautomatische Fahrzeugführung, so wird ein Vorwarnsignal V generiert, wenn im Fahrerassistenzsystem 6 beispielsweise ein Systemfehler auftritt oder wenn eine Verkehrssituation erkannt wird, die eine manuelle Steuerung erforderlich macht. Ein entsprechender Systemfehler kann dabei dadurch hervorgerufen werden, dass ein nicht näher dargestelltes Sensorsystem, welches für die vollautomatische Fahrzeugführung benötigt wird, fehlerhaft arbeitet. Das entsprechende Vorwarnsignal V wird dann an den Ereignisdatenschreiber 2 übermittelt und infolge dessen startet eine im Ereignisdatenschreiber 2 enthaltene Steuereinheit 8, eine Aufzeichnung von Protokolldaten P, wobei die Protokolldaten P in einem Datenspeicher 10 abgespeichert werden. Die Protokolldaten P umfassen hierbei Bilddaten B einer Innenraumkamera 12, mit deren Hilfe das Verhalten des jeweiligen Fahrzeugführers oder Fahrers des Kraftfahrzeugs 4 festgehalten wird.

Zeitgleich wird das Vorwarnsignal V an ein Display 14 des Kraftfahrzeuges 4 einerseits und an ein Lautsprechersystem 16 im Kraftfahrzeug 4 übermittelt, wodurch der jeweilige Fahrzeugführer sowohl optisch als auch akustisch darauf hingewiesen oder vorgewarnt wird, dass er die Fahrzeugführung übernehmen soll. Das Fahrerassistenzsystem 6 wird nach einer definierten Vorwarnzeitspanne ΔV, beispielsweise 10 Sekunden ab der Übermittlung des Vorwarnsignals V, von einem ersten Status oder Betriebsmodus "vollautomatisch" für die vollautomatische Fahrzeugführung in einen zweiten Status oder Betriebsmodus "manuell" für die manuelle Fahrzeugführung des Kraftfahrzeuges 4 wechseln. Es Erfolgt also ein Statuswechsel W.

Betätigt der jeweilige Fahrzeugführer vor Ablauf der Vorwarnzeitspanne ΔV ein Bedienelement 18, wie beispielsweise ein Pedal oder das Lenkrad, betätigt, wird dies vom Fahrerassistenzsystem 6 registriert und dieses wechselt daraufhin unmittelbar in den Betriebsmodus für die manuelle Fahrzeugführung des Kraftfahrzeugs 4. In diesem Fall erfolgt daher der Statuswechsel W durch eine manuelle Triggerung durch den Fahrzeugführer.

Mit dem Statuswechsel W erfolgt regelmäßig der Übergang der Verantwortlichkeit an den Fahrzeugführer. Bleibt eine entsprechende Reaktion des Fahrzeugführers innerhalb der Vorwarnzeitspanne ΔV aus, so erfolgt der Statuswechsel W automatisch nach Ablauf der Vorwarnzeitspanne ΔV.

Unabhängig davon, ob der Statuswechsel zwischen den Betriebsmodi des Fahrerassistenzsystems 6 durch eine Reaktion des Fahrzeugführers ausgelöst wird, oder nach Ablauf der 10 Sekunden erfolgt, wird die Aufzeichnung der Protokolldaten P nach Ablauf einer Kontrollzeitspanne ΔK von der Steuereinheit 8 beendet. Die Kontrollzeitspanne ΔK beginnt insbesondere mit dem Statuswechsel W.

Ereignet sich nun innerhalb einer Ereigniszeitspanne ΔE während der Aufzeichnung der Protokolldaten ein Unfall, so wird dies beispielsweise mithilfe eines Unfalldetektionssystems, beispielsweise ein Aufprall- oder Abstandssensorsystems 20 registriert und das Abstandssensorsystem 20 übermittelt ein Unfallereignissignal E an die Steuereinheit 8. Infolge dieses Unfallereignissignals erfolgt dann eine dauerhafte Abspeicherung der zu diesem Unfallereignis gehörigen Protokolldaten P. Die Ereigniszeitspanne ΔE beginnt im Ausführungsbeispiel kurz nach dem Vorwarnsignal V und vor dem Statuswechsel W oder alternativ auch mit dem Vorwarnsignal V. Sie endet mit der Kontrollzeitspanne ΔK.

Der Datenspeicher 10 weist bevorzugt mehrere Speicherbereiche 22 auf und derjenige Speicherbereich 22, in dem die entsprechenden Protokolldaten P abgespeichert sind, wird für die Folgezeit gesperrt. Diese Sperrung wird erst dann wieder aufgehoben, wenn der gesperrte Speicherbereich 22 über eine nicht näher dargestellte Schnittstelle ausgelesen und die darin gespeicherten Protokolldaten in einem externen Gerät gesichert werden.

Die übrigen Speicherbereiche 22, also die nicht gesperrten Speicherbereiche 22, werden genutzt um einen rollierenden Betrieb des Datenspeichers 10 zu realisieren. Das heißt, dass bei jedem Statuswechsel zwischen den Betriebsmodi des Fahrerassistenzsystems 6 Protokolldaten P, also unter anderem die Bilddaten B der Innenraumkamera 12, in einem Speicherbereich 22 abgespeichert werden. Sind dann in allen Speicherbereichen 22 Protokolldaten hinterlegt, so wird beim nächsten Statuswechsel der Speicherbereich 22 mit den ältesten Protokolldaten mit neuen Protokolldaten P überschrieben. Lediglich die gesperrten Speicherbereiche 22 sind hiervon ausgenommen und werden dementsprechend nicht überschrieben, unabhängig davon, ob es sich hierbei um die ältesten Protokolldaten P handelt oder nicht.

Die Erfindung ist nicht auf das vorstehend beschriebene Ausführungsbeispiel beschränkt.

### Bezugszeichenliste

- 2: Ereignisdatenschreiber
- 4: Kraftfahrzeug
- 6: Fahrerassistenzsystem
- 8: Steuereinheit
- 10: Datenspeicher
- 12: Innenraumkamera
- 14: Display
- 16: Lautsprechersystem
- 18: Bedienelement
- 20: Abstandssensorsystem
- 22: Speicherbereich

- V: Vorwarnsignal
- W: Statuswechsel
- E: Unfallereignissignal
- ΔV: Vorwarnzeitspanne
- ΔK: Kontrollzeitspanne
- ΔE: Ereigniszeitspanne
- P: Protokolldaten
- B: Bilddaten

## Patentansprüche

1. Fahrerassistenzsystem (6) mit einem Ereignisdatenschreiber (2) zur automatisierten Protokollierung eines Übergangs der Verantwortlichkeit bei einem Statuswechsel (W) zwischen einer vollautomatischen Fahrzeugführung und einer manuellen Fahrzeugführung eines Kraftfahrzeuges (4) umfassend einen Datenspeicher (10) und eine Steuereinheit (8), wobei die Steuereinheit (8) derart eingerichtet ist, dass eine zeitlich begrenzte Aufzeichnung von Protokolldaten (P,B) mittels des Datenspeichers (10) ausgelöst wird, wenn ein Vorwarnsignal (V), welches den Statuswechsel (W) zwischen der vollautomatischen Fahrzeugführung und der manuellen Fahrzeugführung ankündigt, an die Steuereinheit (8) übermittelt wird.

2. Fahrerassistenzsystem (6) nach Anspruch 1,
wobei die Protokolldaten (P, B) den Zeitpunkt des Vorwarnsignals (V) umfassen.

3. Fahrerassistenzsystem (6) nach Anspruch 1 oder 2,
wobei die Protokolldaten (P, B) Bilddaten (B) einer Innenraumkamera (12) im Kraftfahrzeug (4) umfassen.

4. Fahrerassistenzsystem (6) nach einem der Ansprüche 1 bis 3,
das zur vollautomatischen Fahrzeugführung sowie zur automatischen Erzeugung des Vorwarnsignals (V) ausgebildet ist.

5. Fahrerassistenzsystem (6) nach einem der Ansprüche 1 bis 4,
das bei Auftreten des Vorwarnsignals (V) zusätzlich zur Ausgabe eines akustischen und/oder optischen Signals zur Vorwarnung eines Fahrzeugführers ausgebildet ist.

6. Fahrerassistenzsystem (6) nach Anspruch 4 oder 5,
das derart eingerichtet ist, dass es nach einer Vorwarnzeitspanne (ΔV) ab der des Vorwarnsignals (V) von einem ersten Status "vollautomatisch" in einen zweiten Status "manuell" wechselt.

7. Fahrerassistenzsystem (6) nach einem der Ansprüche 1 bis 6,
das derart ausgebildet ist, dass die zeitlich begrenzte Aufzeichnung von Protokolldaten (P, B) nach einer Kontrollzeitspanne (ΔK) ab dem Statuswechsel (W) zwischen einer vollautomatischen Fahrzeugführung und einer manuellen Fahrzeugführung beendet wird.

8. Fahrerassistenzsystem (6) nach einem der Ansprüche 1 bis 7,
das derart ausgebildet ist, dass die Protokolldaten (P, B) nur dann dauerhaft im Datenspeicher (10) abgespeichert werden, wenn innerhalb einer definierten Ereigniszeitspanne (ΔE) ein Unfallereignissignal (E) an die Steuereinheit (8) übermittelt wird.

9. Fahrerassistenzsystem (6) nach einem der Ansprüche 1 bis 8,
das derart ausgebildet ist, dass der Datenspeicher (10) nach Art eines rollierenden Speichers genutzt wird.

10. Fahrerassistenzsystem (6) nach einem der Ansprüche 1 bis 9,
wobei der Ereignisdatenschreiber (2) zusätzlich für eine Protokollierung von Unfallrekonstruktionsdaten ausgebildet ist, anhand derer sich Unfallereignisse rekonstruieren lassen.

11. Fahrerassistenzsystem (6) nach Anspruch 10,
wobei die Protokolldaten (P, B) und die Unfallrekonstruktionsdaten unabhängig voneinander aufgezeichnet und in verschiedenen Datenspeichern (10) oder Datenspeicherbereichen (22) abgespeichert werden.

12. Verfahren zur automatisierten Protokollierung eines Wechsels der Verantwortlichkeit bei einem Statuswechsel (W) zwischen einer vollautomatischen Fahrzeugführung und einer manuellen Fahrzeugführung eines Kraftfahrzeuges (4), wobei eine zeitlich begrenzte Aufzeichnung von Protokolldaten (P, B) mittels eines Datenspeichers (10) ausgelöst wird, wenn ein Vorwarnsignal (V), welches den Statuswechsel (W) zwischen einer vollautomatischen Fahrzeugführung und einer manuellen Fahrzeugführung ankündigt, an eine Steuereinheit (8) übermittelt wird.

## Claims

1. A driver assistance system (6) having an event data writer (2) for automatically logging a transition of the responsibility during a status change (W) between a fully automatic control and a manual control of a motor vehicle (4), comprising a data storage (10) and a control unit (8), wherein the control unit (8) is designed such that a time-limited recording of log data (P, B) is triggered by means of the data storage (10) when a pre-warning signal (V), which announces the status change (W) between the fully automatic vehicle operation and the manual vehicle operation, is transmitted to the control unit (8).

2. The driver assistance system (6) of claim 1,
wherein the log data (P, B) comprise the point in time of the pre-warning signal (V).

3. The driver assistance system (6) of claim 1 or 2,
wherein the log data (P, B) comprise image data (B) of an interior camera (12) in the motor vehicle (4).

4. The driver assistance system (6) of any one of claims 1 to 3,
configured for fully automatic vehicle operation and for automatic generation of the pre-warning signal (V).

5. The driver assistance system (6) of any one of claims 1 to 4, which upon occurrence of the pre-warning signal (V) is additionally configured to emit an acoustic and/or optical signal to pre-warn a vehicle driver.

6. The driver assistance system (6) of claim 4 or 5, designed such that following a pre-warning time span (ΔV) after the pre-warning signal (V) it switches from a first "fully automatic" status to a second "manual" status.

7. The driver assistance system (6) of any one of claims 1 to 6, configured such that the time-limited recording of log data (P, B) is terminated following a control time span (ΔK) after the status change (W) between a fully automatic and a manual vehicle operation.

8. The driver assistance system (6) of any one of claims 1 to 7,
configured such that the log data (P, B) are only stored permanently in the data storage (10), if within a defined event time span (ΔE) an accident event signal (E) is transmitted to the control unit (8).

9. The driver assistance system (6) of any one of claims 1 to 8,
configured such that the data storage (10) is used as a kind of rolling memory.

10. The driver assistance system (6) of any one of claims 1 to 9,
wherein the event data writer (2) is also configured for logging accident reconstruction data, by means of which accident events can be reconstructed.

11. The driver assistance system (6) of claim 10,
wherein the log data (P, B) and the accident reconstruction data are recorded independently of one another and stored in different data storages (10) or data storage areas (22).

12. A method for automatically logging a transition of the responsibility during a status change (W) between a fully automatic control and a manual control of a motor vehicle (4), wherein a time-limited recording of log data (P, B) is triggered by means of a data storage (10) when a pre-warning signal (V), which announces the status change (W) between a fully automatic vehicle operation and a manual vehicle operation, is transmitted to a control unit (8).

## Revendications

1. Système d'aide à la conduite (6) avec un enregistreur de données événementielles (2) pour la protocolisation automatisée d'un transfert de la responsabilité lors d'un changement de statut (W) entre un guidage entièrement automatique et un guidage manuel d'un véhicule (4), comprenant une mémoire de données (10) et une unité de commande (8), l'unité de commande (8) étant conçue de telle sorte qu'un enregistrement limité dans le temps de données de protocole (P, B) au moyen de l'enregistreur de données (10) est déclenché lorsqu'un signal d'avertissement (V) annonçant le changement de statut (W) du guidage entièrement automatique au guidage manuel du véhicule est transmis à l'unité de commande (8).

2. Système d'aide à la conduite (6) selon la revendication 1,
les données de protocole (P, B) comprenant l'instant du signal d'avertissement (V).

3. Système d'aide à la conduite (6) selon la revendication 1 ou 2,
les données de protocole (P, B) comprenant des données (B) d'images d'une caméra d'habitacle (12) dans le véhicule (4).

4. Système d'aide à la conduite (6) selon l'une des revendications 1 à 3,
étant formé pour le guidage entièrement automatique du véhicule ainsi que pour la génération automatique du signal d'avertissement (V).

5. Système d'aide à la conduite (6) selon l'une des revendications 1 à 4, étant de plus formé pour l'émission d'un signal acoustique et/ou optique pour l'avertissement d'un conducteur du véhicule lorsque le signal d'avertissement (V) est émis.

6. Système d'aide à la conduite (6) selon la revendication 4 ou 5,
conçu de telle sorte qu'il passe d'un premier statut « entièrement automatique » à un deuxième statut « manuel », après un intervalle d'avertissement (ΔV) à partir du signal d'avertissement (V).

7. Système d'aide à la conduite (6) selon l'une des revendications 1 à 6, formé de telle sorte que l'enregistrement limité dans le temps de données de protocole (P, B) est arrêté après un intervalle de contrôle (ΔK) à partir du changement de statut (W) d'un guidage entièrement automatique à un guidage manuel du véhicule.

8. Système d'aide à la conduite (6) selon l'une des revendications 1 à 7,
lequel est formé de telle sorte que les données de protocole (P, B) ne sont enregistrées de façon durable dans la mémoire de données (10) que lorsqu'un signal d'accident (E) est transmis à l'unité de commande (8) pendant un intervalle d'événement (ΔE) défini.

9. Système d'aide à la conduite (6) selon l'une des revendications 1 à 8,
lequel est formé de telle sorte que la mémoire de données (10) est utilisée à la manière d'une mémoire FIFO.

10. Système d'aide à la conduite (6) selon l'une des revendications 1 à 9,
l'enregistreur de données événementielles (2) étant de plus formé pour une protocolisation de données de reconstruction d'accident à l'aide desquelles des accidents peuvent être reconstruits.

11. Système d'aide à la conduite (6) selon la revendication 10,
les données de protocole (P, B) et les données de reconstruction d'accident étant enregistrées indépendamment les unes des autres et étant stockées dans différentes mémoires de données (10) ou zones de mémoire de données (22).

12. Procédé pour la protocolisation automatisée d'un changement de la responsabilité lors d'un changement de statut (W) entre un guidage entièrement automatique et un guidage manuel d'un véhicule (4), un enregistrement limité dans le temps de données de protocole (P, B) au moyen d'une mémoire de données (10) étant déclenché lorsqu'un signal d'avertissement (V) annonçant le changement de statut (W) entre le guidage entièrement automatique et le guidage manuel du véhicule est transmis à une unité de commande (8).
